# EUROPEAN PATENT SPECIFICATION

(11) **EP 1 376 096 B1**
(45) Date of publication and mention of the grant of the patent: **15.10.2008**
(21) Application number: 02014228.7
(22) Date of filing: 26.06.2002
(51) Int. Cl.: G01N 1/30

(54) **Antigen activating method**
Verfahren zur Aktivierung von Antigenen
Méthode pour activer les antigènes

(43) Date of publication of application: 02.01.2004
(73) Proprietor: Namimatsu, Shigeki, Kawagoe-shi, Saitama-ken 350-1124 (JP); Nissin EM Co. Ltd., Tokyo 160-0007 (JP)
(72) Inventor: Namimatsu, Shigeki, Kawagoe-shi, Saitama-ken 350-1124 (JP); Nissin EM Co. Ltd., Tokyo 160-0007 (JP)
(74) Representative: Müller, Enno

(56) References cited:
- WO-A-94/04906
- US-A- 2 827 419
- US-B1- 6 274 702
- SHI SHAN-RONG ET AL: "Standardization and further development of antigen retrieval immunohistochemistry: Strategies and future goals." JOURNAL OF HISTOTECHNOLOGY, vol. 22, no. 3, 1999, pages 177-192, XP008010874 ISSN: 0147-8885
- SHI SHAN-RONG ET AL: "Antigen retrieval immunohistochemistry and molecular morphology in the year 2001." APPLIED IMMUNOHISTOCHEMISTRY & MOLECULAR MORPHOLOGY, vol. 9, no. 2, June 2001 (2001-06), pages 107-116, XP000801872 June, 2001
- ELIAS JULES M: "Antigen restoration: The "hot" revolution in immunohistochemistry." JOURNAL OF HISTOTECHNOLOGY, vol. 24, no. 3, September 2001 (2001-09), pages 193-198, XP008010873 ISSN: 0147-8885

## Description

### BACKGROUND OF THE INTENTION

### 1. Technical field of the invention

The present invention relates to a method for activating an antigen immuno-cyto or immuno-tissue during chemical staining, and particularly to a method to expose (activate, unmask, or retrieve) an antigenicity, when cytos or tissues on a slide glass are stained in immunohistochemistry.

### 2. Description of the Prior Art

Conventionally three antigen activators such as citrate buffer solution, urea added tris salt buffer solution, and ethylenediaminetetraacetate (EDTA) are mainly used for activating the antigen during immunostaining by heat and pressurization treatment.
Concretely, the following antigen activation methods are known;
(1) The activation method by using a citrate buffer solution of pH 6.0 and concentration 0.01 mol. and by pressurization, heating or humidification by using a microwave oven, autoclave, electric pot, constant-temperature bath, or scalder.
(2) The activation method by using a citrate buffer solution of pH 7.0 and concentration 0.01 mol. containing 5 % urea by pressurization and heating by using an autoclave.
(3) The activation method by using pH 95 and concentration 0.1 mol. tris-HCI buffer solution containing 5 % urea by pressurization, heating, or humidification by using a microwave oven, autoclave, electric pot, constant-temperature bath, or scalder.
(4) The activation method by using an EDTA solution of pH 8.0 and concentration 0.01 mol. by pressurization, heating, or humidification by using a microwave oven, autoclave, electric pot, constant-temperature bath, or scalder.

Those are main techniques currently employed.

Further, reference documents are listed below;
1) Shi S.R., Key, M.E., "Kalra, K.L.; Antigen retrieval in formalin-fixed, paraffin-embedded tissues: an enhancement method for immunohistochemical staining based on microwave oven heating of tissue sections.J.Histochem. 39: 741-748, 1991
2) Shi S.R., Cote R.J., Young L., Imam S.A Taylor C.R.: Use of pH9.5 Tris-HCI buffer containing 5 % urea for antigen retrieval immunohistochemistry, Biotechnic & Histochemistry 71 (4): 190-6,1996 Jul.
3) Cattoretti G., Becker M.H.G, Key G., et al.: Monoclonal antibodies produced against recombinant parts of the Ki-67 molecule (MIB-1 to -3) stain proliferating cytos in formalin fixed, paraffin-embedded; microwave processed tissues. Histochem J. 234 : 611, 1992 (Abstr.)
4) Shin R.W., Iwaki T., Kitamono T., et al.; Hydrated autoclave pretreatment enhances tau immunoreactivity in formalin-fixed normal and Alzheimer's disease brain tissues. Lab. Invest 64 : 693-702, 1991
5) HAMAKAWA Shinji: An investigation on antigen activation by heat treatment during enzyme-antibody staining using anti-CD4 monoclonal antibody (Byohri to Rinshoh (Pathology and Clinical Pathology) 1999, 17(11): 1201-1205)
6) HAMAKAWA Shinji: An investigation on an antigen activator in place of EDTA solution (Byohri Gijutu (Pathological Techniques)) 1999, 60 : 10-14

Currently, the antigen activators are selected, depending upon object antigens. However, the current technique has disadvantages that the working procedures are complex, the activation of the antigen is imperfect, and the reproducibility of activation is spoor.

US 2,827,419 does disclose the preparation and purification of derivatives of gelatine to make them useful as blood plasma substitutes. Among others, it is referred to citraconic anhydride. US 6,274,702 does disclose proteins and polypeptides for stimulating bone growth. It is referred among others to citraconic anhydride diluted in H₂O. The finally obtained solution is for intramuscular injection, for example into the rear legs of rabbits.

### Summary of the invention

An object of the present invention is to provide an activation method for unmasking an antigen during immunohistochemical staining.

The present invention is directed to a method of antigen activation based on a solution of citraconic acid anhydride (systematic name: CCA) or 2-methylmaleic acid anhydride (common name: methylmaleic acid anhydride) which is most effective for the unmasking of antigens, when immuno-cytos or immuno-tissues are stained chemically.

CCA of the present invention executes the unmasking of all of the target antigens with effect equivalent to or greater than the conventional activators.

Concretely, the unmasking method of the present invention is to unmask the tissue cytos of which antigenicity of the antigen is masked by aldehyde during the immuno-tissue-cyto- chemical staining.

The unmasking method of the present invention comprises the steps of soaking a slice of tissue cytos stuck on a glass slide in CCA solution; and heating for a sufficient time period the slice of tissue cytos by either one of an electric pot, autoclave, microwave oven, scalder, or constant-temperature bath (including pressurization when the autoclave is used); and soaking the tissue cytos in a buffer solution, after completing heating; and executing the enzyme-antibody staining.

Further, 4 to 20 % NaOH (sodium hydroxide) aqueous solution may be added in the CCA solution in order to control the pH.

According to the present invention, the antigen-antibody reaction becomes more active, thereby reducing the antibody concentration and therefore antibody quantity, because the activator of the present invention activates the antigen more strongly than the conventional activator, and stabilizes the unmasked antigen. Therefore, reagent quantity is reduced. Further, diagnosis cost is reduced, because the activated antigen is stabilized, thereby raising diagnosis reproducibility and reducing false diagnosis.

### BRIEF EXPLANATION OF THE DRAWINGS

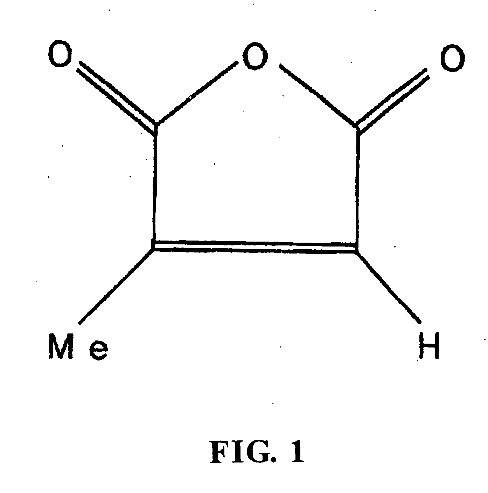

Figure 1 is a chemical structure of citraconic acid anhydride (CCA), where Me is methyl.

### PREFERRED EMBODIMENT OF THE INVENTION

The present invention is useful in general in chemical staining of immuno-tissue -cytos. The present invention provides a method for activating and unmasking the antigenicity inside the tissue cytos which is masked by aldehyde fixation, thereby facilitating the antigen-antibody reaction. The above-mentioned step precedes the chemical staining.

The water which dissolves CCA as shown in Figure 1 should not contain any impurity and any element which may cause any residue on the glass slide. Therefore, the water may preferably be distilled water, or more preferably be deionized water. The above-mentioned water is useful to obtain a impurity-free aqueous solution for an application to the chemical staining of the immuno-tissue-cytos. The CCA concentration in the impurity-free aqueous solution may be 0.001 to 10 %, preferably 0.01 to 1 %, and most preferably 0.05 %.

The pH of the CCA impurity-free aqueous solution may be acidic, neutral, or alkaline pH, for example, pH 5.0 to pH 10.0, preferably be pH 7.0 to pH 8.0, and most preferably be pH 7.4.

The pH 7.4 is approximately the pH of living matters which is neither acidic nor alkaline, and therefore, most preferable for preventing damages against the tissue cytos. The salt for controlling the pH may be NaOH in a form of 20 to 4 % NaOH (sodium hydroxide) aqueous solution, most preferably. The NaOH concentration should not deviate from above-mentioned range. For a preliminary treatment before the chemical staining, the activation is executed to the slice of the tissue cytos which are buried in paraffin and fixed by aldehyde. Tissue cyto treatment for recognizing antigens is called unmasking of antigen or simply "unmasking". The antigens to be unmasked are decided experimentally and are being reported in various documents. The CCA solution is applied, before the first antibody reaction, and preferably, immediately after the endogenous peroxidase treatment.

The slice of tissue cytos is treated as follows.

The time period for treatment reaction may be long enough to break the bridges by aldehyde, as long as the tissue cytos and antigens are not destroyed. The above-mentioned time period depends upon temperature, CCA concentration, thickness of tissue and time period for the aldehyde fixation. The suitable time period for the treatment reaction is easily decided as follows.

When the electric pot which is sold on the market is employed, 45 to 60 minute heating at 80 to 100 °C, or preferably 45 minute heating at 100 °C is suitable.

Further, when the autoclave is employed, 15 to 20 minute pressurization and heating at 121 °C, or preferably 20 minute pressurization and heating at 121 °C is suitable.

Further, when the microwave oven is employed, 15 to 20 minute heating at 98 to 100 °C, or preferably 20 minute heating at 100 °C is suitable.

Further, when the gas range scalder is employed, 30 to 45 minute heating at 95 to 100 °C, or preferably 45 minute heating at 100 °C is suitable.

Further, when the constant-temperature bath is employed, 16 hour minute (overnight) heating at 60 to 70 °C, or preferably overnight heating at 60 °C is suitable.

In the present invention, CCA functions as a reagent for saving the tissues and cytos damaged during the fixation by aldehyde such as formalin. The aldehyde fixation causes bridge bonds which mask the antigens in the tissue cytos, thereby preventing the antigen from recognizing the antibody. As a result, the immuno-staining between the antigen and antibody is prevented, thereby leading a false negative decision and therefore a false evaluation of tisuue cyto specimen. Here, the reagent CCA can destroy the bridge bondings by aldehyde and modifies the amino acids of the tissue cytos. As a result, the amino acids which are reacting groups of the antigens which react against the antibodies are exposed to the reagent. However, it should be noted that non-specific stainings may often cause misunderstandings and erroneous diagnoses.

### (EXAMPLE)

1) An organ tissue block such as a lymph node of fixed human or various animals, of 1 to 2 cm thickness is sliced out.
2) The sliced tissue block is fixed in an aldehyde fixation solution such as a 20 % formalin solution/buffer solution, in the well-known manner, where the buffer solution is a 0.1 mol. and pH 7.4 phosphate buffer.
3) The fixed tissue block is dehydrated by alcohol, in the well-known manner.
4) The dehydrated tissue block is made clear by xylene, in the well-known manner.
5) The clear tissue block is soaked and wrapped in paraffin liquid melted by heating, in the well-known manner.
6) The paraffin wrapped tissue block is cooled and solidified, in the well-known manner.
7) The solidified tissue block is sliced as thin as 2 to 5 µ m by a microtome and is stuck on a slide glass with exfoliation preventer, in the well-known manner.
8) The sliced tissue block wrapped in paraffin is deparaffinated by xylene, thereby exposing the tissue, and is water-washed through alcohol.
9) The slide glass with the specimen is soaked in CCA solution of 0.05 % and pH 7.4 in order to have an amity for the CCA solution. For exapmle, when the specimen is the CD4 antigen, the slide glass with the slice in a basket is powerfully boiled in the electric pot filled with the CCA solution. The electric pot may be that sold on the market. Other antigens are activated similarly.
   When the slice may be easily exfoliated, or it may not be heat- resistive at a high temperature, it may be heated overnight (16 hours) at 60 °C in the constant temperature bath.
10) After completing the heat treatment, the slide glass with the tissue slice is picked out from the heating tool and is soaked in a buffer, where the buffer is tris buffer saline (1 liter - (0.05 mol. and pH 7.6 tris-HCl buffer) added with 8.5 g NaCl).
11) The tissue slice is stained by the enzyme-antibody staining method, in the well-known manner.

## Claims

1. An antigen activation method for unmasking said antigen masked by aldehyde fixation which comprises the steps of:
soaking a slice of tissue cytos stuck on a slide glass in citraconic anhydride aqueous solution and heating.

2. The antigen activation method according to claim 1, wherein either one of an electric pot, autoclave, microwave oven, scalder, or constant-temperature bath is employed for said heating.

3. The antigen activation method according to claim 1, wherein 4 to 20 % NaOH aqueous solution is added in said citraconic anhydride aqueous solution.

## Patentansprüche

1. Antigen-Aktivierungsverfahren zum Demaskieren des Antigens, das durch Aldehyd-Fixierung maskiert ist, aufweisend die Schritte:
Einweichen eines Teils von Gewebezellen auf einem Objektträgerglas in einer wässrigen Citraconic-Anhydrid-Lösung (CCA) und Erhitzen.

2. Antigen-Aktivierungsverfahren nach Anspruch 2, wobei zum Erhitzen eines der Mittel ausgewählt aus elektrischem Gefäß, Autoclav, Mikrowellenofen, Erhitzer (Scalder) oder ein Konstanttemperaturbad verwendet ist.

3. Antigen-Aktivierungsverfahren nach Anspruch 1, wobei 4 bis 20% wässrige Lösung NaOH in die wässrige Lösung aus Citraconic-Anhydrid zugegeben ist.

## Revendications

1. Un procédé d'activation d'un antigène pour démasquer ledit antigène masqué par la fixation d'un aldéhyde qui comprend les étapes de :
trempage d'une coupe de cytos de tissu fixée sur une lame de verre dans une solution aqueuse d'anhydride citraconique et chauffage.

2. Le procédé d'activation d'un antigène selon la revendication 1, dans lequel on utilise l'un parmi une bouilloire électrique, un autoclave, un four à micro-ondes, un ébouillanteur, ou un bain à température constante pour ledit chauffage.

3. Le procédé d'activation d'un antigène selon la revendication 1, dans lequel 4 à 20% d'une solution aqueuse de NaOH est ajoutée dans ladite solution aqueuse d'anhydride citraconique.
